# EUROPÄISCHE PATENTSCHRIFT

(11) **EP 4 110 679 B1**
(45) Veröffentlichungstag und Bekanntmachung des Hinweises auf die Patenterteilung: **02.04.2025**
(21) Anmeldenummer: 21707655.3
(22) Anmeldetag: 22.02.2021
(51) Int. Cl.: B62D 1/184, B62D 1/19

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 27.02.2020 DE 102020202531
(43) Veröffentlichungstag der Anmeldung: 04.01.2023
(73) Patentinhaber: thyssenkrupp Presta AG, 9492 Eschen (LI); thyssenkrupp AG, 45143 Essen (DE)
(72) Erfinder: DOMIG, Markus, 6781 Bartholomäberg (AT)
(74) Vertreter: thyssenkrupp Intellectual Property GmbH
(86) Internationale Anmeldenummer: PCT/EP2021/054256
(87) Internationale Veröffentlichungsnummer: WO 2021/170514

(56) Entgegenhaltungen:
- EP-B1- 2 996 924
- DE-A1- 102011 083 190
- DE-A1- 102020 212 932
- DE-B3- 102008 034 807
- DE-T5- 112015 002 019

## Beschreibung

### Stand der Technik

Die Erfindung betrifft eine Lenksäule für ein Kraftfahrzeug, umfassend eine äußere Manteleinheit, die mit dem Kraftfahrzeug direkt oder indirekt verbindbar ist und in der ein Mantelrohr in Längsrichtung verstellbar gehaltert ist, in dem eine Lenkspindel um ihre in Längsrichtung erstreckte Längsachse drehbar gelagert ist, wobei ein Energieabsorptionselement zwischen der Manteleinheit und dem Mantelrohr einkoppelbar ist, welches bei einer Relativbewegung von Manteleinheit und Mantelrohr in Längsrichtung unter Energieabsorption plastisch verformbar ist, wobei ein Halterungselement lösbar mit dem Mantelrohr verbunden ist, wobei das Energieabsorptionselement zwischen dem Halterungselement und dem Mantelrohr angebracht ist, und das Halterungselement ein das Energieabsorptionselement zumindest teilweise aufnehmendes Halterungsgehäuse aufweist, wobei das Energieabsorptionselement in einem Innenraum des Halterungsgehäuses aufgenommen ist.

Bei einer derartigen längenverstellbaren, aus dem Stand der Technik bekannten Lenksäule kann das am hinteren Ende der Lenkspindel angebrachte Lenkrad zur Anpassung der Lenkradposition an die Fahrerposition in Längsrichtung der Lenksäulen-Längsachse verstellt werden.

Zur Längenverstellung ist das Mantelrohr, auch als Innenmantel oder inneres Mantelrohr bezeichnet, in dem die Lenkspindel drehbar gelagert ist, in einer Manteleinheit, auch als Außenmantel, Führungskasten oder äußeres Mantelrohr bezeichnet, in Längsrichtung teleskopartig verschiebbar gehalten. Dadurch kann eine Längenverstellung realisiert werden, wie beispielsweise in der DE 10 2008 034 807 B3 beschrieben. Die Manteleinheit kann direkt oder über eine Trageinheit an der Fahrzeugkarosserie befestigt sein.

Zur Fixierung der Lenkradposition kann eine Spanneinrichtung vorgesehen sein, die manuell oder motorisch zwischen einer Freigabe- oder Lösestellung, und einer Fixierstellung umgeschaltet werden kann. In der Freigabestellung kann das Mantelrohr relativ zur Manteleinheit durch teleskopierendes Ein- oder Ausschieben in Längsrichtung verstellt werden. In der Fixierstellung, die beispielsweise durch manuelle Betätigung eines Spannhebels eingestellt werden kann, wird das Mantelrohr in der Manteleinheit verspannt, so dass die Lenkradposition unter den üblicherweise im Fahrbetrieb zu erwartenden mechanischen Belastungen fixiert ist. Alternativ zur manuellen Spanneinrichtung kann eine motorische Verstelleinrichtung vorgesehen sein, beispielsweise durch einen Spindeltrieb mit einer in eine Spindelmutter eingreifenden Gewindespindel, die relativ zu der Spindelmutter motorisch drehend antreibbar ist, wobei sich der Spindeltrieb zwischen Manteleinheit und Mantelrohr abstützt. Durch relative Drehung von Gewindespindel und Spindelmutter ist eine motorische Positionierung der Mäntel in Achsrichtung möglich, und im Stillstand erfolgt eine relative Fixierung durch die Selbsthemmung des Spindeltriebs.

Zur Verbesserung der Insassensicherheit bei einem Fahrzeugzusammenstoß, dem sogenannten Crashfall, bei dem ein Körper mit hoher Geschwindigkeit auf das Lenkrad aufprallt, ist es bekannt, zwischen Mantelrohr und Manteleinheit eine Energieabsorptionseinrichtung einzukoppeln, auch als Crash-System bezeichnet. Wird im Crashfall durch einen auf das Lenkrad auftreffenden Körper eine hohe Kraft auf das Lenkrad ausgeübt wird, die einen vorgegebenen Grenzwert überschreitet, werden die beiden Mäntel auch in Fixierposition der Spann- oder Verstelleinrichtung in Längsrichtung zusammengeschoben, wobei mindestens ein Energieabsorptionselement der Energieabsorptionseinrichtung plastisch verformt wird und dadurch die in Längsrichtung eingeleitete kinetische Energie absorbiert, d.h. in Verformungsarbeit umgesetzt, so dass der auf das Lenkrad auftreffende Körper kontrolliert abgebremst wird und die Verletzungsgefahr verringert wird.

Aus der genannten DE 10 2008 034 807 B3 ist es bekannt, als Energieabsorptionselement einen Biegestreifen einzusetzen, der in Längsrichtung zwischen Manteleinheit und Mantelrohr abgestützt ist, und der im Crashfall fortlaufend plastisch umgebogen wird. Das Energieabsorptionselement ist in einer fest und unlösbar an dem Mantelrohr ausgebildeten Führungsschiene angeordnet und an dem Mantelrohr befestigt, und über einen darin eingreifenden Mitnehmer an der Manteleinheit abgestützt. Durch den fest vorgegebenen Aufbau ist die Herstellung und Montage aufwendig und unflexibel.

Aus der DE 11 2015 002 019 T5 ist eine Lenksäule der eingangs genannten Art bekannt. Nachteilig daran ist der teilweise außen frei liegende Biegestreifen.

Angesichts der vorangehend erläuterten Problematik ist es eine Aufgabe der vorliegenden Erfindung, eine verstellbare Lenksäule mit einer verbesserten Energieabsorptionsvorrichtung zur Verfügung zu stellen.

### Darstellung der Erfindung

Diese Aufgabe wird erfindungsgemäß gelöst durch die Lenksäule mit den Merkmalen des Anspruchs 1. Vorteilhafte Weiterbildungen ergeben sich aus den Unteransprüchen.

Bei einer Lenksäule für ein Kraftfahrzeug, umfassend eine äußere Manteleinheit, die mit dem Kraftfahrzeug direkt oder indirekt verbindbar ist und in der ein Mantelrohr in Längsrichtung verstellbar gehaltert ist, in dem eine Lenkspindel um ihre in Längsrichtung erstreckte Längsachse drehbar gelagert ist, wobei ein Energieabsorptionselement zwischen der Manteleinheit und dem Mantelrohr einkoppelbar ist, welches bei einer Relativbewegung von Manteleinheit und Mantelrohr in Längsrichtung unter Energieabsorption plastisch verformbar ist, wobei ein Halterungselement lösbar mit dem Mantelrohr verbunden ist, wobei das Energieabsorptionselement zwischen dem Halterungselement und dem Mantelrohr angebracht ist und das Halterungselement ein das Energieabsorptionselement zumindest teilweise aufnehmendes Halterungsgehäuse aufweist, wobei das Energieabsorptionselement in einem Innenraum des Halterungsgehäuses aufgenommen ist, wird erfindungsgemäß vorgeschlagen, dass das Halterungselement ein Befestigungselement zur Verbindung mit dem Energieabsorptionselement (61) aufweist zur Bildung einer in Längsrichtung wirksamen Formschlussverbindung, wobei das Befestigungselement in dem Innenraum des Halterungsgehäuses vorgesehen ist.

Das Halterungsgehäuse weist einen Innenraum auf, in der das Energieabsorptionselement aufnehmbar ist. Das Energieabsorptionselement, welches beispielsweise einen Biegedraht aufweist, kann von Innenwänden, die den Innenraum begrenzen, zumindest teilweise umschlossen sein. Dadurch wird ein definierter Bewegungs- oder Führungsraum zur Verfügung gestellt, der die Verformung des Energieabsorptionselements im Crashfall begrenzen kann. Beispielsweise kann ein unerwünschtes seitliches Ausweichen eines Biegeelements durch den Innenraum begrenzt oder verhindert werden. Ein Vorteil ist, dass die Verformung des Energieabsorptionselements besser kontrolliert erfolgen kann, wodurch die Funktion und die Betriebssicherheit verbessert wird.

Die Längsachse der Lenkspindel kann auch als Drehachse bezeichnet werden, wobei die Längsrichtung die Richtung der Längsachse ist.

Das erfindungsgemäß ausgebildete Halterungselement dient im Crashfall zur Einleitung der Crashkraft in das Energieabsorptionselement. Hierzu ist das Energieabsorptionselement mit dem Mantelrohr und dem Halterungselement verbunden. Das Halterungselement ist ausgestaltet und angeordnet, dass es in Fixierstellung der Spann- oder Verstelleinrichtung zur Übertragung der Crashkraft in Längsrichtung an der Manteleinheit abgestützt ist. Dadurch wird die im Crashfall auftretende Crashkraft, die durch den auf das Lenkrad und die Lenkspindel aufprallenden Körper erzeugt wird, von der Manteleinheit in das Halteelement eingeleitet und wirkt auf die Verbindung zwischen dem Halteelement und dem Mantelrohr. Diese erfindungsgemäß lösbar ausgestaltete Verbindung wird durch die Crashkraft gelöst oder aufgehoben bzw. getrennt, und das Halterungselement zur Bewegung in Längsrichtung von dem Mantelrohr freigegeben.

Erfindungsgemäß ist vorgesehen, dass das Halterungselement ein Befestigungselement zur Verbindung mit dem Energieabsorptionselement aufweist. Im Innenraum des bevorzugt kastenförmigen Halterungsgehäuses ist mindestens ein Befestigungselement zur Anbringung eines Energieabsorptionselements vorgesehen. Bevorzugt sind das Befestigungselement und das Energieabsorptionselement derart korrespondierend ausgestaltet, dass eine Montage des Energieabsorptionselements durch eine offene Seite des bevorzugt kasten- oder rinnenförmigen Halterungsgehäuses ermöglicht ist. Beispielsweise kann ein in Längsrichtung erstreckter Schenkel eines Biegestreifens ein Formschlusselement aufweisen, welches durch Einsetzen durch die in Einbaulage dem Mantelrohr zugewandten Öffnung mit einem korrespondierenden Formschlusselement des Halterungsgehäuses in Formschlusseingriff bringbar ist zur erfindungsgemäßen Bildung einer in Längsrichtung wirksamen Formschlussverbindung. Dadurch kann eine Baugruppe vormontiert werden, bei der das Energieabsorptionselement im Halterungselement fixiert ist. Zur Montage wird diese Baugruppe mit der vorgenannten offenen Seite, durch die zuvor das Energieabsorptionselement montiert wurde, radial von außen gegen das Mantelrohr angesetzt und mit diesem verbunden, beispielsweise durch Einrasten der oben beschriebenen Verbindungselemente wie Rastverbinder oder dergleichen. Es ist bevorzugt, dass dabei an dem Energieabsorptionselement und dem Mantelrohr korrespondierende Befestigungselemente vorgesehen sind, welche die Abstützung des Energieabsorptionselements in Längsrichtung ermöglichen. Bevorzugt können diese Formschlusselemente aufweisen, die bei dem vorangehend beschriebenen Ansetzen und Verbinden des Halterungselements an das Mantelrohr ebenfalls in Formschlusseingriff kommen. Das Halterungselement und das Energieabsorptionselement haben dann dieselbe Montagerichtung zur jeweiligen Fixierung an dem Mantelrohr. Beispielsweise kann ein in dem Halterungselement vormontierter Biegestreifen eine Öffnung oder Öse oder dergleichen aufweisen, die auf einem radial von dem Mantelrohr vorstehenden Zapfen formschlüssig festgelegt wird. Alternativ ist es auch denkbar und möglich, dass ein Biegestreifen mit seinem am Mantelrohr zu fixierenden Schenkel in Längsrichtung - beispielsweise stirnseitig - über das Halterungselement vorsteht, so das zur formschlüssigen Fixierung ein Bolzen oder dergleichen eingesetzt oder eingeschraubt wird. Auf jeden Fall kann der Montageaufwand der Energieabsorptionseinrichtung verglichen mit dem Stand der Technik in vorteilhafter Weise reduziert werden. Die Energieabsorptionseinrichtung kann alternativ auch als Energieabsorptionseinheit bezeichnet werden.

Die lösbare Verbindung zwischen dem Halterungselement ist vorzugsweise durch Einwirkung einer definierten Lösekraft lösbar, d.h. definiert trennbar, wobei diese Lösekraft im Normalbetrieb der Lenksäule nicht erreicht wird, und nur durch die hohe Belastung im Crashfall durch die Crashkraft erreicht oder überschritten wird. Bei der im Crashfall anschließend auftretenden relativen Verlagerung von Manteleinheit und Mantelrohr in Längsrichtung wird das Halterungselement von der Manteleinheit relativ zum Mantelrohr mitgenommen. Dabei wird das Energieabsorptionselement zwischen dem Halterungselement und dem Mantelrohr zur Energieabsorption über einen vorgegebenen Crashweg, der die relative Verlagerung von Manteleinheit und Mantelrohr im Crashfall angibt, in Längsrichtung kontrolliert plastisch deformiert.

Das Halterungselement ist im Normalbetrieb durch die lösbare Verbindung an dem Mantelrohr fixiert, und kann bei einer Längenverstellung der Lenksäule zusammen mit dem Mantelrohr relativ zur Manteleinheit verstellt werden. Im Crashfall wird jedoch im Unterschied zu der aus dem Stand der Technik bekannten festen Führungsschiene das erfindungsgemäße Halterungselement von dem Mantelrohr gelöst, und dann zusammen mit der Manteleinheit relativ zum Mantelrohr bewegt. Mit anderen Worten ist im Normalbetrieb das Halterungselement fix mit dem Mantelrohr, und im Crashfall fix mit der Manteleinheit. Die Mitbewegung des Halterungselements hat den Vorteil, dass Reibung, die im Crashfall zwischen dem Energieabsorptionselement und dem Mantelrohr und/oder der Manteleinheit auftreten und die Energieabsorptionsfunktion beeinträchtigen kann, durch die Gestaltung des Halterungselements effektiv reduziert werden kann. Dadurch kann die Funktionssicherheit der Energieabsorptionseinrichtung erhöht werden.

Ein Energieabsorptionselement, beispielsweise ein Biegedraht, kann einfach an dem erfindungsgemäßen Halterungselement fixiert werden, beispielsweise durch Verbindungsmittel wie Vorsprünge, Zapfen, Haken, Niet oder einen einpressbaren Stift oder stiftförmigen Abschnitt oder dergleichen in Längsrichtung wirksame Formschlusselemente, welche eine effektive Einleitung der Crashkraft in das Energieabsorptionselement ermöglichen. Die durch Anbringung des Energieabsorptionselements an dem Halterungselement vormontierte Baugruppe kann in einem nächsten Schritt durch Fixierung des Halterungselements an dem Mantelrohr montiert werden. Dadurch kann die Montage des Energieabsorptionselements vereinfacht, und die Montage und Fertigung der Lenksäule rationalisiert werden.

Eine vorteilhafte Ausführung der Erfindung kann vorsehen, dass das Halterungselement und das Mantelrohr miteinander korrespondierende Verbindungselemente aufweisen. Die Verbindungselemente können beispielsweise ineinander eingreifende Formschlusselemente aufweisen, beispielsweise von dem Halterungselement vorstehende Vorsprünge oder dergleichen, die bevorzugt quer zur Längsrichtung in Eingriff bringbar sind mit korrespondierenden Gegen-Formschlusselementen, beispielsweise Aufnahmeöffnungen in dem Mantelrohr. Die Verbindungselemente können bevorzugt federnde oder elastische Steck-, Rast- und/oder Schnappverbinder aufweisen, die eine besonders einfache Montage des Halterungselements ermöglichen. Bevorzugt können die Verbindungselemente ausgestaltet sein, dass sie bis zum Erreichen eines vorgegebenen Kraft-Grenzwerts, welcher der oben genannten Lösekraft entspricht, einen sicheren Halt des Halterungselements an dem Mantelrohr gewährleisten. Erst wenn im Crashfall eine diese Lösekraft überschreitende Crashkraft auf das Halterungselement einwirkt, wird die durch die Verbindungselemente erzeugte Verbindung gelöst, und das Halterungselement kann relativ zum Mantelrohr bewegt werden.

Das Energieabsorptionselement und das Mantelrohr können miteinander verbindbare Verbindungselemente aufweisen. Bevorzugt können diese Verbindungselemente Formschlusselemente umfassen, die in derselben Montagerichtung wie das Halterungselement, bevorzugt quer zur Längsrichtung, vor oder zusammen mit den Verbindungselementen an Halterungselement und Mantelrohr in Eingriff gebracht werden können. Beispielsweise kann ein Biegedraht, der bereits an dem Halterungselement vormontiert ist, ein Formschlusselement wie beispielsweise einen Vorsprung, einen Haken oder eine Öse haben, welches bei der Montage des Halterungselements an dem Mantelrohr in ein korrespondierendes Gegen-Formschlusselement an dem Mantelrohr eingreift zur Erzeugung einer in Längsrichtung belastbaren Verbindung des Biegedrahts mit dem Mantelrohr. Dabei ist bevorzugt, dass die Verbindung zwischen dem Energieabsorptionselement und dem Mantelrohr auch beim Erreichen und Überschreiten der Lösekraft der Verbindung des Halterungselements nicht gelöst wird, sondern eine sichere Fixierung und Abstützung des Energieabsorptionselements am Mantelrohr im Crashfall gewährleistet. Durch die Möglichkeit, die Verbindungselemente an dem Halterungselement und die Verbindungselemente an dem Energieabsorptionselement, beispielsweise einem Biegestreifen, in derselben Montagerichtung bevorzugt quer zur Längsrichtung in Eingriff zu bringen, kann die Montage eine aus dem Halterungselement und dem Energieabsorptionselement vormontierten Baugruppe vereinfacht werden.

Es kann bevorzugt vorgesehen sein, dass das Halterungselement über ein Sollbruchelement mit dem Mantelrohr verbunden ist. Durch mindestens ein Sollbruchelement kann die lösbare

Verbindung zwischen Mantelrohr und Halterungselement als Sollbruchverbindung ausgebildet sein, die beim Überschreiten einer vorgegebenen Lösekraft reißt oder bricht. Dadurch kann erreicht werden, dass im Crashfall, wenn die auf das Halterungselement wie oben beschrieben einwirkende Crashkraft die Lösekraft überschreitet, das Halterungselement von dem Mantelrohr losbricht und in Längsrichtung von der Manteleinheit mitgenommen wird. Dabei ist es denkbar und möglich, dass mindestens eines der vorgenannten Verbindungselement zur Verbindung des Halterungselements mit dem Mantelrohr als Sollbruchelement ausgebildet ist, beispielsweise als abreißbarer Abschnitt oder Öse des Halterungselements, Scherstift, Brechzapfen oder Reißelement. Auch eine Rast- oder Schnappverbindung kann als Sollbruchelement im Sinne der Erfindung ausgestaltet sein, die beim Überschreiten der Lösekraft elastisch oder plastisch verformt und gelöst oder aufgetrennt wird. Auch eine aus einem Langloch herausziehbare Befestigung kann eine Sollbruchverbindung bereitstellen.

Es kann vorteilhaft sein, dass das Halterungsgehäuse das Energieabsorptionselement auf mindestens drei Seiten umgibt, bevorzugt auf der radial dem Mantelrohr abgewandten, in Längsrichtung erstreckten Längsseite und den daran seitlich, in Umfangsrichtung anschließenden Längsseiten. Dadurch kann bei einem Biegestreifen eine Art nut- oder rinnenförmiger Innenraum gebildet werden, der sich in Längsrichtung erstreckt und die sich ebenfalls in Längrichtung erstreckenden Schenkel des Biegestreifens, die durch eine Umbiegung um im Wesentlichen 180° verbunden sind, seitlich umgreifen. Eine vorteilhafte Weiterbildung kann vorsehen, dass das Halterungsgehäuse das Energieabsorptionselement auf mindestens vier Seiten umschließt, nämlich zusätzlich zu den genannten Längsseiten an mindestens einer quer zur Längsachse stehenden Stirnseite. Dadurch kann in vorteilhafter Weise eine zusätzliche Begrenzung und Abstützung in Längsrichtung erfolgen. Bevorzugt kann es vorgesehen sein, dass die vier Seiten jeweils eine Normalenrichtung aufweisen, die orthogonal zur Längsrichtung ist.

Der Innenraum des Halterungsgehäuses kann bevorzugt auf der dem Mantelrohr zugewandten Innenseite offen sein, so dass ein Innenraum in Form einer offenen, kasten-, nut- oder rinnenförmigen Ausnehmung gebildet wird. Dieser Innenraum wird bei der Anbringung durch die Außenfläche des Mantelrohrs geschlossen, so dass das Energieabsorptionselement, beispielsweise ein Biegestreifen, auf allen vier Seitenflächen und gegebenenfalls stirnseitig in Längsrichtung eingeschlossen sein kann. In einer praktischen Ausführung kann das Halterungsgehäuse im Wesentlichen kastenförmig, in Form eines drei- oder vierseitig geschlossenen Kastens ausgebildet sein, der auf seiner bezüglich der Längsachse radial innenliegenden, offenen Seite radial von außen an das Mantelrohr angebracht wird. Der Kasten wird bei der Montage innen durch das Mantelrohr geschlossen und entsprechend wird der zur Verformung des Energieabsorptionselements zur Verfügung stehende Innenraum auf mindestens vier oder fünf Seiten begrenzt. Das Energieabsorptionselement, beispielsweise ein Biegestreifen, kann geschützt und in einer kompakten Bauform im Innenraum des kastenförmigen Halterungsgehäuses untergebracht sein. Dadurch wird eine montagefreundliche, betriebssichere Anordnung realisiert.

Es kann vorteilhaft sein, dass das Halterungselement eine Führungseinrichtung aufweist zur Begrenzung des Bewegungsraums des Energieabsorptionselements. Die Führungseinrichtung kann ausgestaltet sein, um eine räumlich definierte Verformung des Energieabsorptionselements im Crashfall zu ermöglichen und zu unterstützen. Beispielsweise kann der vorangehend beschriebene Innenraum eines Halterungsgehäuses Teil einer Führungseinrichtung sein. Zusätzlich oder alternativ kann die Führungseinrichtung Führungsflächen oder Führungselemente aufweisen, beispielsweise Umlenkkanten oder -flächen, Verformungselemente, Ambosse, Ablenkflächen oder dergleichen, welche eine kontrollierte Verformung eines Energieabsorptionselements ermöglichen oder begünstigen. Dadurch kann die Funktions- und Betriebssicherheit erhöht werden.

Eine vorteilhafte Ausführung kann vorsehen, dass das Halterungselement mindestens ein Verbindungsmittel aufweist zur lösbaren Verbindung ist mit der Manteleinheit. Das Verbindungsmittel sorgt in der Fixierstellung für eine in Längsrichtung abgestützte Fixierung des Halterungselements an der Manteleinheit, so dass im Crashfall die Manteleinheit das Halterungsgehäuse relativ zum Mantelrohr in Längsrichtung mitnimmt. Das Verbindungsmittel kann bevorzugt korrespondierende Formschlusselemente am Halterungselement und an der Manteleinheit umfassen, die zur Ausbildung einer in Längsrichtung wirksamen formschlüssigen Verbindung in Fixierstellung in Eingriff bringbar sind. Beispielsweise kann außen am Halterungselement eine Verzahnung angebracht oder ausgebildet sein, die in Formschlusseingriff bringbar ist mit einer korrespondierenden, an der Manteleinheit in Längsrichtung abgestützten Gegenverzahnung. Dadurch, dass die Verzahnungen nur in der Fixierstellung in Eingriff gebracht werden, beispielsweise durch Betätigung der Spann- oder Verstelleinrichtung, und in Freigabestellung voneinander gelöst sind, kann das Halterungselement zur Verstellung zusammen mit dem Mantelrohr relativ zur Manteleinheit in Längsrichtung bewegt werden.

Das Energieabsorptionselement kann mindestens einen Biegestreifen aufweisen. Biegestreifen oder Biegeelemente sind als Energieabsorptionselemente im Stand der Technik im Prinzip bekannt, und weisen zwei langgestreckte Schenkel auf, die über eine Umbiegung von im Wesentlichen 180° miteinander verbunden sind. Bei der Erfindung wird bevorzugt ein Schenkel an oder in dem Halterungselement fixiert, und der andere Schenkel an dem Mantelrohr, wobei die Schenkel bevorzugt im Wesentlichen parallel zur Längsrichtung liegen. Alternativ oder zusätzlich können auch andere Mechanismen zur Umwandlung von kinetischer Energie in Verformungsarbeit und/oder Reibung zum Einsatz kommen, beispielsweise Reiß-, Quetsch-, Stauch- und/oder Reibelemente.

Eine vorteilhafte Ausführung sieht vor, dass das Halterungselement einstückig ausgebildet ist. Dabei können Funktionselemente wie Verbindungselemente, Verbindungsmittel, Befestigungselement, Sollbruchelemente und/oder Führungselemente integriert sein, auch in einer Ausführung, die ein Halterungsgehäuse aufweist. Eine einstückige Ausbildung ist beispielsweise im Kunststoffspritzguss oder Metalldruckguss möglich, oder als Sinterteil, oder auch durch additive Fertigungsverfahren wie Kunststoff- oder Metall-Druckverfahren.

Es ist möglich, dass das Halterungselement einen metallischen Werkstoff und/oder einen Kunststoff umfasst. Dabei ist eine einstückige Fertigung möglich, oder auch eine Kombination verschiedener, an die jeweilige Beanspruchung angepasster Materialien möglich. Beispielsweise ist eine Fertigung als Kunststoff-Spritzgussteil möglich, bei dem Funktionsteile aus metallischem Werkstoff eingesetzt und mit Kunststoff umspritzt sind.

Eine vorteilhafte Ausführung der Erfindung sieht vor, dass eine Spanneinrichtung mit dem Halterungselement zusammenwirkt, die in eine Fixierstellung bringbar ist, in der sie das Mantelrohr relativ zur Manteleinheit festlegt, und in eine Freigabestellung, in der sie eine Verstellung des Mantelrohrs relativ zur Manteleinheit zumindest in Längsrichtung freigibt, wobei in Fixierstellung die Spanneinrichtung das Halterungselement relativ zur Manteleinheit festlegt und in der Freigabestellung eine Bewegung des Halterungselements relativ zur Manteleinheit freigibt. Die Spanneinrichtung kann - manuell oder motorisch - betätigt werden, um einen Spannhub quer zur Längsachse auszuüben und in Fixierstellung eine Spannkraft zu erzeugen, durch die das Mantelrohr lösbar mit der Manteleinheit geklemmt bzw. verspannt wird. In der Freigabe- oder Lösestellung kann das Mantelrohr relativ zur Manteleinheit verstellt werden. Die Spanneinrichtung weist weiterhin lösbare Verbindungsmittel auf, die mit dem erfindungsgemäßen Halterungselement zusammenwirken, Diese weisen beispielsweise korrespondierende Formschlusselemente auf, die in Fixierstellung miteinander in Eingriff gebracht werden und dafür sorgen, dass das Halterungselement in Längsrichtung formschlüssig an der Manteleinheit fixiert ist. Insbesondere ist diese bevorzugt formschlüssige Verbindung zwischen Manteleinheit und Halterungselement höher belastbar als die Lösekraft, die im Crashfall bewirkt, dass die bevorzugt kraftschlüssige Klemmung zwischen Mantelrohr und Manteleinheit überwunden wird, und das Halterungselement von dem Mantelrohr gelöst wird. Dadurch ist sichergestellt, dass im Crashfall das Halterungselement von der Manteleinheit relativ zum Mantelrohr mitgenommen wird, und dabei das erfindungsgemäß zwischen Halterungselement und Mantelrohr angeordnete Energieabsorptionselement unter Energieabsorption deformiert wird.

Eine bevorzugte Ausführung der vorgenannten Ausführung ist, dass die Spanneinrichtung ein Arretierelement aufweist, und das Halterungselement ein korrespondierendes Eingriffselement, das in Fixierstellung mit dem Arretierelement in Eingriff bringbar ist zur Erzeugung einer in Längsrichtung wirksamen Verbindung, die in der Freigabestellung lösbar ist. Das Arretierelement kann beispielsweise als Zahnstein ausgebildet sein mit einer Verzahnung, die beim Fixieren der Spanneinrichtung in Eingriff gebracht werden kann mit einer korrespondierenden Verzahnung am Eingriffselement des Halteelements zur Bildung einer in Längsrichtung wirksamen Formschlussverbindung. Dadurch, dass das Arretierelement in Fixierstellung der Spanneinrichtung in Längsrichtung an der Manteleinheit abgestützt ist, bildet es ein Verbindungsmittel zur lösbaren Verbindung ist mit der Manteleinheit, wie weiter oben bereits beschrieben. Das Arretierelement kann durch Betätigung der Spanneinrichtung durch den Spannhub bevorzugt quer gegen die Längsachse bewegt und auf diese Weise beim Fixieren mit dem Eingriffselement in Fixierstellung in Eingriff gebracht und fixiert werden. Durch einfache Betätigung der Spanneinrichtung, beispielsweise durch manuelle Drehung eines mit einem Hub- oder Spanngetriebe zusammenwirkenden Spannbolzens, kann das erfindungsgemäße Haltelement mit der Manteleinheit gekoppelt werden, so dass es im Crashfall relativ zum Mantelrohr bewegt wird, an dem es im Normalbetrieb lösbar fixiert ist. Dadurch kann einfach und betriebssicher die oben bereits beschriebene Funktionalität realisiert werden, dass das Halterungselement im Normalfall am Mantelrohr fixiert ist und beim Verstellen damit zusammen bewegt wird, und im Crashfall das Halterungselement an der Manteleinheit fixiert ist und zusammen mit diesem relativ zum Mantelrohr bewegt wird, was einen wesentlichen Unterschied zum Stand der Technik darstellt und die beschriebenen Vorteile ermöglicht.

Das Halterungselement weist bevorzugt eine Verzahnung auf. Die Verzahnung weist eine Vielzahl von Zähnen auf, wobei sich die Zähne bevorzugt auf einer Außenseite des Halterungselements über eine Breite in Erstreckungsrichtung erstrecken, die größer ist als die räumliche Ausdehnung des Energieabsorptionselements in Erstreckungsrichtung. Die Erstreckungsrichtung ist orthogonal zu der Stirnschnittebene der Verzahnung ausgerichtet. Dies bedeutet bei einer Geradverzahnung, dass die Erstreckungsrichtung der Richtung der Flankenlinie entspricht. Die Zähne erstrecken sich entlang ihrer Zahnflanken.

In einer bevorzugten Ausführungsform ist die Breite der Zähne in Erstreckungsrichtung größer als der Abstand, den die zwei sich gegenüberliegenden Längsseiten des Halterungselements zueinander aufweisen, die zu der Erstreckungsrichtung orthogonal angeordnet sind. Das Energieabsorptionselement kann beispielsweise durch eine Arretiereinrichtung, wie die genannte Spanneinrichtung, zwischen der Manteleinheit und dem Mantelrohr einkoppelbar sein. Alternativ kann durch eine Montage das Energieabsorptionselement zwischen der Manteleinheit und dem Mantelrohr einkoppelbar sein, sprich es ist nach der Montage eingekoppelt. Beispielsweise ist es denkbar und möglich, dass zwischen der Manteleinheit und dem Mantelrohr unter Zwischenschaltung des Halterungselements und dem Energieabsorptionselement eine motorische Verstelleinrichtung angeordnet ist. Die motorische Verstelleinrichtung weist einen elektrischen Motor und ein Getriebe auf zur motorischen Verstellung des Mantelrohrs gegenüber der Manteleinheit in Richtung der Längsachse.

Weiterhin wird eine nicht-erfindungsgemäße Lenksäule für ein Kraftfahrzeug vorgeschlagen, umfassend eine Trageinheit, an der eine Stelleinheit verlagerbar gehaltert ist, wobei in der Stelleinheit eine um eine Längsachse drehbar gelagerte Lenkspindel aufgenommen ist, wobei eine Energieabsorptionseinheit vorgesehen ist.

Die Energieabsorptionseinheit weist ein Halterungsgehäuse auf, in dem ein Energieabsorptionselement zumindest teilweise umschlossen aufgenommen ist, wobei die Energieabsorptionseinheit außen an der Stelleinheit derart lösbar angebracht ist, dass bei einer Relativbewegung der Energieabsorptionseinheit gegenüber der Stelleinheit das Energieabsorptionselement plastisch deformierbar ist.

Bevorzugt kann die Energieabsorptionseinheit dadurch außen an der Stelleinheit lösbar angebracht sein, wobei bevorzugt das Halterungsgehäuse außen an der Stelleinheit derart lösbar angebracht ist, so dass bei einer Relativbewegung der Energieabsorptionseinheit gegenüber der Stelleinheit das Energieabsorptionselement plastisch deformierbar ist. Dadurch ist das Halterungsgehäuse von der Stelleinheit lösbar und kann relativ zur Stelleinheit und dem Energieabsorptionselement verlagert werden, und zwar insbesondere im Crashfall. Wie oben bereits dargelegt, kann die Energieabsorptionseinheit bzw. das Halterungsgehäuse über eine Sollbruchverbindung mit der Stelleinheit verbunden sein, die durch Trennen oder Brechen eines Sollbruchelements lösbar ist.

Unter anderem das Halterungsgehäuse und das Energieabsorptionselement können gemäß den bereits dargelegten vorteilhaften Weiterbildungen ausgebildet sein.

Bevorzugt können die Energieabsorptionseinheit und die Stelleinheit jeweils als eine eigenständige Baugruppe bilden. Eine Baugruppe umfasst zumindest zwei Einzelbauteile. Im Fall der Energieabsorptionseinheit sind dies zumindest das Halterungsgehäuse und das Energieabsorptionselement. Die Stelleinheit umfasst zumindest ein Mantelrohr und die darin gelagerte Lenkspindel. Unter der eigenständigen Baugruppe wird verstanden, dass diese voneinander unabhängig aus ihren jeweiligen Einzelteilen montierbar sind und erst nach dieser Montage miteinander verbunden sind.

Bevorzugt ist die Energieabsorptionseinheit beschädigungsfrei von der Stelleinheit demontierbar. Dies bedeutet, dass das Halterungsgehäuse und das Energieabsorptionselement nach der Demontage ohne Beschädigung sind. Es ist jedoch nicht ausgeschlossen, dass separate Verbindungsmittel wie beispielsweise Nieten zerstört werden müssen bei der Demontage.

Die Lenksäule und insbesondere die Energieabsorptionseinheit, die auch als Energieabsorptionseinrichtung bezeichnet werden kann, können gemäß den zuvor ausgeführten Weiterbildungen ausgebildet sein, insbesondere kann die Energieabsorptionseinheit gemäß den Merkmalen der Ansprüche 1 bis 12 ausgebildet sein. Die Energieabsorptionseinheit kann beispielsweise als Energieabsorptionselement einen Biegestreifen umfassen.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer schematischen perspektivischen Ansicht,
- Figur 2: eine Teilansicht der Lenksäule gemäß Figur 1 in teilweise auseinander gezogenem Zustand,
- Figur 3: eine Teilansicht der Lenksäule gemäß Figur 1 und 2 in einer schematischen perspektivischen Ansicht,
- Figur 4: die Teilansicht gemäß Figur 3 mit einer schematisch auseinander gezogenen Energieabsorptionseinrichtung,
- Figur 5: die Energieabsorptionseinrichtung der Lenksäule gemäß Figuren 1 bis 4 in einer teilweise durchbrochenen, vergrößerten Ansicht,
- Figur 6: einen schematischen Längsschnitt durch die Energieabsorptionseinrichtung im normalen Betriebszustand vor einem Crash,
- Figur 7: einen schematischen Längsschnitt durch die Energieabsorptionseinrichtung wie in Figur 5 nach einem Crash.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

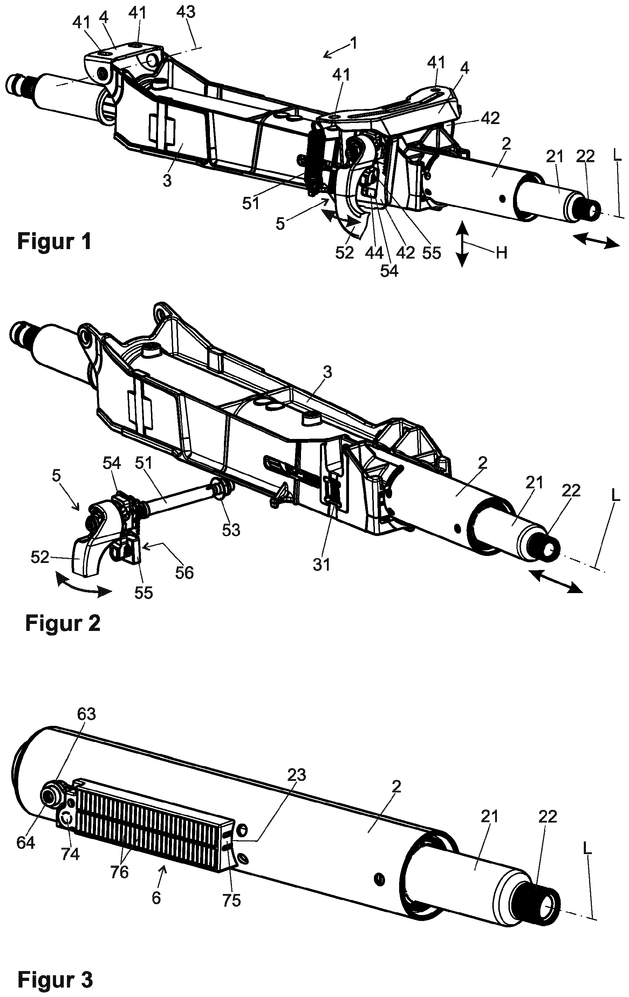

Figur 1 zeigt eine erfindungsgemäße Lenksäule 1 in einer perspektivischen Darstellung - bezogen auf die Fahrtrichtung - schräg von hinten. Diese umfasst ein Mantelrohr 2, auch als Innenmantel bezeichnet, in dem eine Lenkspindel 21 um die Längsachse L drehbar gelagert ist, die an ihrem bezüglich der Fahrtrichtung hinteren, der Fahrerposition zugewandten Ende einen Befestigungsabschnitt 22 zur Anbringung eines nicht dargestellten Lenkrads aufweist.

Das Mantelrohr 2 ist in einer äußeren Manteleinheit 3, auch als Führungskasten bezeichnet, in Längsrichtung, d.h. in Richtung der Längsachse L teleskopartig verstellbar aufgenommen und gehalten. Dadurch wird eine Längenverstellung ermöglicht, wie mit dem Doppelpfeil angedeutet.

Eine Trageinheit 4 weist Befestigungsöffnungen 41 zur Anbringung an einer nicht dargestellten Karosserie eines Kraftfahrzeugs auf. Die Manteleinheit 3 ist zwischen Seitenwangen 42 aufgenommen, die sich von der Trageinheit 4 zwei beiderseits der Längsachse L nach unten erstrecken. Dadurch, dass die Manteleinheit 3 im vorderen Bereich um eine horizontal quer zur Längsachse L liegende Schwenkachse 23 gelagert ist, kann sie bezüglich der Seitenwangen 42 in einer Höhenrichtung H verschwenkt werden, zur Höhenverstellung der Lenksäule 1 wie mit dem Doppelpfeil angedeutet.

Eine Spanneinrichtung 5 ist vorgesehen, die wahlweise in Fixierstellung gebracht werden kann, um das Mantelrohr 2 in Längsrichtung lösbar in der Manteleinheit 3 zu fixieren, und gleichzeitig die Manteleinheit 3 in Höhenrichtung H an der Trageinheit 4 zu fixieren. Die Spanneinrichtung 5 ist in Figur 2 von der Manteleinheit 3 schematisch separiert dargestellt, in der zur besseren Übersicht die Trageinheit 4 weggelassen ist.

Die Spanneinrichtung 5 umfasst einen die beiden Seitenwangen 42 und die Manteleinheit 3 quer zur Längsachse L durchsetzenden Spannbolzen 51, an dem ein Spannhebel 52 drehfest angebracht ist. An der in der Zeichnung hinteren Seitenwange 42 stützt sich der Spannbolzen 51 über ein Widerlager 53 bezüglich seiner Erstreckung quer zur Längsachse von außen ab. Auf der anderen, dem Betrachter zugewandten Seitenwange 42 stützt sich der Spannbolzen 51 über ein Hubgetriebe 54 ab. Dieses Hubgetriebe 54, auch als Spanngetriebe bezeichnet, dient zur Umsetzung einer über den Spannhebel 52 erzeugten Drehung des Spannbolzens 51 um seine Achse - mit dem gerundeten Pfeil angedeutet - in eine Hub- bzw. Spannbewegung, mit der dieser in Richtung des Hubbetriebes 54 gezogen wird. Dadurch werden die beiden Seitenwangen 42 mit der durch das Hubgetriebe 54 erzeugten Spannkraft gegeneinander und damit von außen gegen die Manteleinheit 3 verspannt. In dieser Fixierstellung ist die Manteleinheit 3 zwischen den Seitenwangen 42 eingeklemmt. Gleichzeitig ist das Mantelrohr 2 in der Manteleinheit 3 festgeklemmt.

Wird die Spanneinrichtung 5 durch entgegengesetzte Drehung des Spannhebels 52 entspannt bzw. gelöst, wird die Klemmung der Manteleinheit 3 zwischen den Seitenwangen 42 aufgehoben, und es ist eine Höhenverstellung in Höhenrichtung H ermöglich, wobei die Spannachse 51 in den Langlöchern 44 in den Seitenwangen 42 in Höhenrichtung H entlangbewegt wird.

Mit dem Hubgetriebe 54 ist ein Arretierelement verbunden, welches als Zahnstein 55 ausgebildet ist, der auf seiner dem Mantelrohr 2 zugewandten Innenseite eine Verzahnung 56 aufweist, mit quer zur Längsachse L verlaufenden Zähnen.

Der Zahnstein 55 taucht durch eine Öffnung 31 in der Manteleinheit 3 radial, d.h. quer zur Längsachse L hindurch. Beim Fixieren der Spanneinrichtung 5 wird der Zahnstein 55 mit seiner Verzahnung 56 voraus von außen gegen das Mantelrohr 2 bewegt, bis er in Fixierstellung für eine Aktivierung der Energieabsorptionseinrichtung 6 sorgt, die in der freigestellten Darstellung des Mantelrohrs 2 von Figur 3 erkennbar ist.

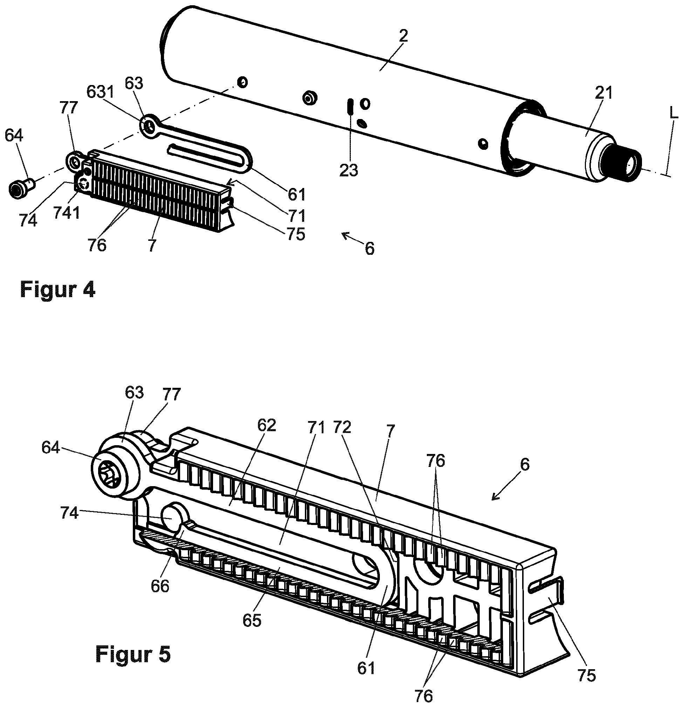

Die Energieabsorptionseinrichtung 6 umfasst als Energieabsorptionselement einen Biegestreifen 61 und ein erfindungsgemäßes Halterungselement 7, wie in der Explosionsdarstellung von Figur 4 erkennbar ist.

Figur 5 zeigt das Halterungselement 7 in derselben Perspektive wie in Figur 4 in vergrößerter Darstellung, wobei die dem Betrachter zugewandte Außenseite durchbrochen bzw. teilweise weggelassen ist, um den Blick auf den Biegestreifen 61 freizugeben.

Das Halterungselement 7 ist als kastenförmiges Halterungsgehäuse ausgebildet, welches auf seiner dem Mantelrohr 2 radial zugewandten Innenseite eine zum Mantelrohr 2 hin offene Ausnehmung 71 aufweist, die einen Innenraum begrenzt, in welcher der Biegestreifen 61 angeordnet ist. Dank der Ausnehmung 71 stellt das Halterungselement 7 ein das als Biegestreifen 61 ausgebildete Energieabsorptionselement 61 zumindest teilweise aufnehmendes Halterungsgehäuse bereit.

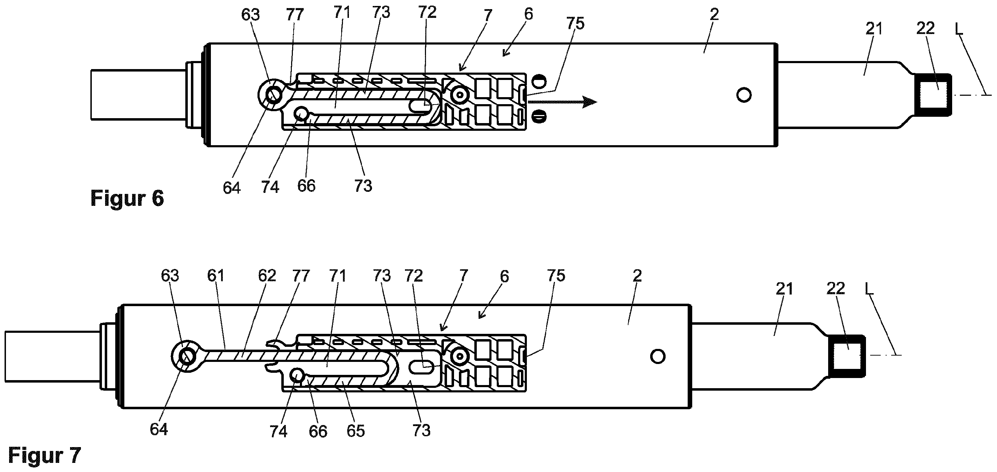

Im montierten Zustand gemäß Figur 3, der in Figur 6 noch einmal in einem Längsschnitt durch die Energieabsorptionseinrichtung 6 gezeigt ist, ist der Biegestreifen 61 im Innenraum der Ausnehmung 71 des Halterungselements 7 von vier Seiten umschlossen, nämlich stirnseitig durch die Innenwand 72, seitlich bezüglich der Längsachse L durch die beiden Innenwände 73, und durch die dem Mantelrohr 2 gegenüberliegende Innenfläche am Grund der Ausnehmung 71, die sich in Figur 5 innen auf der weggelassenen Wand befindet. Dadurch ist der in der Ausnehmung 71 angeordnete Biegestreifen 61 auf insgesamt fünf Seiten eingeschlossen.

Im montierten Zustand ist das kastenförmige Halterungselement 7 an das Mantelrohr 2 angesetzt. Es kann vorgesehen sein, dass die Wände, die den Biegestreifen 61 umschließen, Ausnehmungen oder Löcher aufweisen.

Aus der sechsten, im montierten Zustand noch offenen Seite ragt der insgesamt in etwa U-fömige Biegestreifens 61 mit einem Schenkel 62 heraus, der sich im Wesentlichen parallel zur Längsachse L erstreckt. An seinem Ende weist er eine Öse 63 mit einer Befestigungsöffnung 631 auf, wobei das Halterungselement ebenfalls eine ösenförmigen Abschnitt 77 mit eine zu der Befestigungsöffnung 621 korrespondierenden Öffnung, durch die ein Befestigungselement 64, beispielsweise ein Stift, Bolzen, Schraube, Niet oder Gewindebolzen, hindurchgeführt und mit dem Mantelrohr 2 verbunden ist, um eine formschlüssige, in Längsrichtung belastbare Verbindung des einen Schenkels 62 des Biegestreifens 61 mit dem Mantelrohr 2 zu erzeugen.

Ein mit dem genannten Schenkel 62 über eine Umbiegung von im Wesentlichen 180° verbundener zweiter Schenkel 65 erstreckt sich ebenfalls in Längsrichtung und weist an seinem Ende ein Formschlusselement 66 auf, welches sich in Längsrichtung formschlüssig gegen ein im Innenraum der Ausnehmung 71 angeordnetes Befestigungselement 74 abstützt, welches als in den Innenraum des Halterungselements 7 vorstehender Zapfen oder Vorsprung ausgebildet sein kann. Bevorzugt wird das Befestigungselement 74 durch einen in eine Befestigungsausnehmung 741 des Halterungselements 7 eingepressten Stift gebildet. Dieses als Stift ausgebildete Befestigungselement 74 wird nach der Montage, sprich dem Einsetzen des Biegestreifens 61 in der Ausnehmung 71 in die Befestigungsausnehmung 741 kraftschlüssig eingepresst. In einer bevorzugten Ausführungsvariante kann es vorgesehen sein, dass das als Stift ausgebildete Befestigungselement 74 direkt an dem Halterungselement 7 mit angespritzt ist und diese Verbindung durch das Einpressen in die Befestigungsausnehmung 741 aufgebrochen wird. Somit ist das Befestigungselement 74 und das Halterungselement 7 vor dem Einpressen in die Befestigungsausnehmung 741 ein einstückiges integrales Bauteil, bevorzugt ein Kunststoffspritzgussbauteil.

Das Halterungselement 7 weist ein Verbindungselement 75 auf, beispielsweise wie im dargestellten Beispiel eine am Rand des Halterungselements 7 vorstehende Rastlasche, die formschlüssig in eine korrespondierende Aufnahmeöffnung 23 in dem Mantelrohr 2 einsetzbar ist. Dadurch kann eine erfindungsgemäße Verbindung erzeugt werden, die gelöst werden kann durch Entfernen des Verbindungselements 75 aus der Ausnehmung 71 - oder alternativ durch Durchtrennen des Verbindungselements 75, welches dann ein Sollbruchelement bilden kann.

Auf seiner Außenseite weist das Halterungselement 7 eine Verzahnung 76 auf, die mit der Verzahnung 56 an dem Zahnstein 55 (siehe Figur 2) korrespondiert. In Fixierstellung greifen die Verzahnungen 76 und 56 ineinander ein und erzeugen eine in Längsrichtung wirksame formschlüssige Verbindung, durch die das Halterungselement 7 mit der Manteleinheit 3 verbunden ist.

Durch die im Crashfall von der Manteleinheit 3 in das Halterungselement 7 eingeleitete Crashkraft wird dieses relativ zum Mantelrohr 2 in Längsrichtung belastet, wie in Figur 6 mit dem Pfeil eingezeichnet. Durch die Crashkraft wird die Verbindung zwischen dem Halterungselement 7 und dem Mantelrohr 2 gelöst, durch Entfernung des Verbindungselements 75 aus der Aufnahmeöffnung 23, oder auch durch Abscheren oder Trennen des Verbindungselements 75. Weiters kommt es im Crashfall zum Aufbrechen des ösenförmigen Abschnitts 77 des Halterungselements 7. Dadurch kann eine relative Bewegung des Halterungselements 7 relativ zum Mantelrohr 2 erfolgen, welche über einen Crashweg bewegt wird, bis der in Figur 7 gezeigte Endzustand nach einem Crash erreicht ist. Während der relativen Bewegung wird der Biegestreifen 61 durch relative Bewegung in Längsrichtung der beiden Schenkel 62 und 65 fortlaufend umgebogen, d.h. unter Energieabsorption deformiert, wodurch das Mantelrohr 2 relativ zur Manteleinheit 3 abgebremst wird. Der ösenförmige Abschnitt 77 kann alternativ auch als gabelförmigen Abschnitt ausgebildet sein, bevorzugt mit einer Engstelle am Ende des gabelförmigen Abschnitts. Dank einer solchen Ausbindung als ösenförmigen oder gabelförmigen Abschnitt kann eine lösbare Verbindung bereitgestellt werden, selbst wenn auf das Verbindungselement 75 verzichtet wird.

Durch die Anordnung innerhalb der Ausnehmung wird der Biegestreifen 61 bei der Deformierung im Crashfall durch die Innenwände 72, 73 der Ausnehmung 71 gestützt und geführt, wodurch eine kontrollierte und reproduzierbare Energieabsorption im Crashfall sichergestellt ist.

Zur Montage kann der Biegestreifen 61 durch die offene Seite in die Ausnehmung 71 des Halterungselements 7 eingesetzt werden, so dass das Halterungselement 7 ein das als Biegestreifen 61 ausgebildete Energieabsorptionselement zumindest teilweise aufnehmendes Halterungsgehäuse bereitstellt. Anschließend erfolgt das Einpressen des Befestigungselements 74 in der Befestigungsausnehmung 741, so dass der Biegestreifen 61 in der Ausnehmung 71 festgelegt ist, so dass der Biegestreifen 61 mit dem Formschlusselement 66 an dem Befestigungselement 74 festgelegt ist. Auf diese Weise wird eine vormontierte Baugruppe zur Verfügung gestellt, die durch einfaches Einrasten des Verbindungselements 75 in die Aufnahmeöffnung 23 an dem Mantelrohr 2 montiert werden kann. Anschließend kann der Biegestreifen 61 mittels des Befestigungselements 64 an dem Mantelrohr 2 festgelegt werden.

Das Halterungselement 7 kann einschließlich der Verzahnung 76, des Verbindungselements 75 und des Befestigungselements 74 bevorzugt als einstückiges Kunststoff-Spritzgussteil oder Metallgussteil oder als Sinterteil gefertigt werden. Alternativ kann es auch als Verbundteil aus verschiedenen Materialien ausgestaltet und gefertigt sein.

### Bezugszeichenliste

- 1: Lenksäule
- 2: Mantelrohr
- 21: Lenkspindel
- 22: Befestigungsabschnitt
- 23: Aufnahmeöffnung
- 3: Manteleinheit
- 31: Öffnung
- 4: Trageinheit
- 41: Befestigungsöffnung
- 42: Seitenwangen
- 43: Schwenkachse
- 44: Langloch
- 5: Spanneinrichtung
- 51: Spannbolzen (Spannachse)
- 52: Spannhebel
- 53: Widerlager
- 54: Hubgetriebe
- 55: Zahnstein (Arretierelement)
- 56: Verzahnung
- 6: Energieabsorptionseinrichtung / Energieabsorptionseinheit
- 61: Biegestreifen (Energieabsorptionselement)
- 62, 65: Schenkel
- 621: Befestigungsöffnung
- 63: Öse
- 64: Befestigungselement
- 66: Formschlusselement
- 7: Halterungselement (Halterungsgehäuse)
- 71: Ausnehmung
- 72, 73: Innenwände
- 74: Befestigungselement
- 75: Verbindungselement (Verbindungsmittel, Sollbruchelement)
- 76: Verzahnung
- 77: Abschnitt

## Patentansprüche

1. Lenksäule (1) für ein Kraftfahrzeug, umfassend
eine äußere Manteleinheit (3), die mit dem Kraftfahrzeug direkt oder indirekt verbindbar ist und in der ein Mantelrohr (2) in Längsrichtung verstellbar gehaltert ist, in dem eine Lenkspindel (21) um ihre in Längsrichtung erstreckte Längsachse (L) drehbar gelagert ist,
wobei ein Energieabsorptionselement (61) zwischen der Manteleinheit (3) und dem Mantelrohr (2) einkoppelbar ist, welches bei einer Relativbewegung von Manteleinheit (2) und Mantelrohr (3) in Längsrichtung unter Energieabsorption plastisch verformbar ist,
wobei ein Halterungselement (7) lösbar mit dem Mantelrohr (2) verbunden ist, wobei das Energieabsorptionselement (61) zwischen dem Halterungselement (7) und dem Mantelrohr (2) angebracht ist, und das Halterungselement (7) ein das Energieabsorptionselement (61) zumindest teilweise aufnehmendes Halterungsgehäuse aufweist, wobei das Energieabsorptionselement (61) in einem Innenraum des Halterungsgehäuses aufgenommen ist,
**dadurch gekennzeichnet,**
**dass** das Halterungselement (7) ein Befestigungselement (74) zur Verbindung mit dem Energieabsorptionselement (61) aufweist zur Bildung einer in Längsrichtung wirksamen Formschlussverbindung, wobei das Befestigungselement (74) in dem Innenraum des Halterungsgehäuses vorgesehen ist.

2. Lenksäule nach Anspruch 1, **dadurch gekennzeichnet, dass** das Halterungselement (7) und das Mantelrohr (2) miteinander korrespondierende Verbindungselemente (75, 23) aufweisen.

3. Lenksäule nach einem der vorangehenden Ansprüche, **dadurch gekennzeichnet, dass** das Halterungselement (7) über ein Sollbruchelement (73) mit dem Mantelrohr (2) verbunden ist.

4. Lenksäule nach einem der vorangehenden Ansprüche, **dadurch gekennzeichnet, dass** der Biegestreifen (61) von dem Halterungselement (7) auf mindestens drei Seiten umschlossen ist.

5. Lenksäule nach einem der vorangehenden Ansprüche, **dadurch gekennzeichnet, dass** das Halterungselement (7) eine Führungseinrichtung (72, 73) aufweist zur Begrenzung des Bewegungsraums des Energieabsorptionselements (61).

6. Lenksäule nach einem der vorangehenden Ansprüche, **dadurch gekennzeichnet, dass** das Halterungselement (7) mindestens ein Verbindungsmittel (75, 77) aufweist zur lösbaren Verbindung mit dem Mantelrohr (2).

7. Lenksäule nach einem der vorangehenden Ansprüche, **dadurch gekennzeichnet, dass** das Halterungselement (7) und/oder das Mantelrohr (2) ein Befestigungselement (64) zur Verbindung mit dem Energieabsorptionselement (61) aufweist.

8. Lenksäule nach einem der vorangehenden Ansprüche, **dadurch gekennzeichnet, dass** das Energieabsorptionselement mindestens einen Biegestreifen (61) aufweist.

9. Lenksäule nach einem der vorangehenden Ansprüche, **dadurch gekennzeichnet, dass** das Halterungselement (7) einstückig ausgebildet ist.

10. Lenksäule nach einem der vorangehenden Ansprüche, **dadurch gekennzeichnet, dass** das Halterungselement (7) einen metallischen Werkstoff und/oder einen Kunststoff umfasst.

11. Lenksäule nach einem der vorangehenden Ansprüche, **dadurch gekennzeichnet, dass** eine Spanneinrichtung (5) mit dem Halterungselement (7) zusammenwirkt, die in eine Fixierstellung bringbar ist, in der sie das Mantelrohr (2) relativ zur Manteleinheit (3) festlegt, und in eine Freigabestellung, in der sie eine Verstellung des Mantelrohrs (2) relativ zur Manteleinheit (3) zumindest in Längsrichtung freigibt, wobei in Fixierstellung die Spanneinrichtung (5) das Halterungselement (7) relativ zur Manteleinheit (3) festlegt und in der Freigabestellung eine Bewegung des Halterungselements (7) relativ zur Manteleinheit (3) freigibt.

12. Lenksäule nach Anspruch 11, **dadurch gekennzeichnet, dass** die Spanneinrichtung (5) ein Arretierelement (55) aufweist, und das Halterungselement (7) ein korrespondierendes Eingriffselement (76), das in Fixierstellung mit dem Arretierelement (55) in Eingriff bringbar ist zur Erzeugung einer in Längsrichtung wirksamen Verbindung, die in der Freigabestellung lösbar ist.

## Claims

1. Steering column (1) for a motor vehicle, comprising
an outer casing unit (3) which can be connected directly or indirectly to the motor vehicle and in which a casing tube (2) is mounted adjustably in the longitudinal direction, in which a steering spindle (21) is mounted rotatably about its longitudinal axis (L) extending in the longitudinal direction,
wherein an energy absorption element (61) can be coupled between the casing unit (3) and the casing tube (2), which can be plastically deformed with energy absorption during a relative movement of the casing unit (2) and the casing tube (3) in the longitudinal direction,
wherein a retaining element (7) is detachably connected to the casing pipe (2), wherein the energy absorption element (61) is mounted between the retaining element (7) and the casing tibe (2), and the retaining element (7) has a retaining housing at least partially accommodating the energy absorption element (61), wherein the energy absorption element (61) is accommodated in an interior of the retaining housing, **characterized in**
**in that** the holding element (7) has a fastening element (74) for connection to the energy absorption element (61) in order to form a positive-locking connection which is effective in the longitudinal direction, the fastening element (74) being provided in the interior of the holding housing.

2. Steering column according to claim 1, **characterized in that** the retaining element (7) and the casing tube (2) have corresponding connecting elements (75, 23).

3. Steering column according to one of the preceding claims, **characterized in that** the retaining element (7) is connected to the casing tube (2) via a predetermined breaking element (73).

4. Steering column according to one of the preceding claims, **characterized in that** the bending strip (61) is enclosed by the retaining element (7) on at least three sides.

5. Steering column according to one of the preceding claims, **characterized in that** the holding element (7) has a guide device (72, 73) for limiting the movement space of the energy absorption element (61).

6. Steering column according to one of the preceding claims, **characterized in that** the retaining element (7) has at least one connecting means (75, 77) for detachable connection to the casing tube (2).

7. Steering column according to one of the preceding claims, **characterized in that** the mounting element (7) and/or the casing tube (2) has a fastening element (64) for connection to the energy absorption element (61).

8. Steering column according to one of the preceding claims, **characterized in that** the energy absorption element has at least one bending strip (61).

9. Steering column according to one of the preceding claims, **characterized in that** the retaining element (7) is formed in one piece.

10. Steering column according to one of the preceding claims, **characterized in that** the retaining element (7) comprises a metallic material and/or a plastic.

11. Steering column according to one of the preceding claims, **characterized in that** a clamping device (5) cooperates with the retaining element (7), which can be brought into a fixing position, in which it fixes the casing tube (2) relative to the casing unit (3), and into a release position, in which it releases an adjustment of the casing tube (2) relative to the casing unit (3) at least in the longitudinal direction, in which it releases an adjustment of the casing tube (2) relative to the casing unit (3) at least in the longitudinal direction, wherein in the fixing position the clamping device (5) fixes the holding element (7) relative to the casing unit (3) and in the release position releases a movement of the holding element (7) relative to the casing unit (3).

12. Steering column according to claim 11, **characterized in that** the clamping device (5) has a locking element (55), and the retaining element (7) has a corresponding engagement element (76) which can be brought into engagement with the locking element (55) in the fixing position in order to produce a connection which is effective in the longitudinal direction and can be released in the release position.

## Revendications

1. Colonne de direction (1) pour un véhicule automobile, comprenant
un boîtier extérieur (3) qui peut être relié directement ou indirectement au véhicule à moteur et dans lequel un tube de boîtier (2) est monté de manière réglable dans la direction longitudinale, dans lequel un axe de direction (21) est monté de manière rotative autour de son axe longitudinal (L) s'étendant dans la direction longitudinale, dans lequel un élément d'absorption d'énergie (61) peut être couplé entre l'unité de carter (3) et le tube de boîtier (2), qui peut être déformé plastiquement avec absorption d'énergie lors d'un mouvement relatif de l'unité de carter (2) et du tube de carter (3) dans la direction longitudinale,
dans lequel un élément de retenue (7) est relié de manière amovible au tube de boîtier (2), dans lequel l'élément d'absorption d'énergie (61) est monté entre l'élément de retenue (7) et le tube de boîtier (2), et l'élément de retenue (7) possède un logement de retenue accueillant au moins partiellement l'élément d'absorption d'énergie (61), dans lequel l'élément d'absorption d'énergie (61) est logé à l'intérieur du logement de retenue,
**caractérisé en**
en ce que l'élément de maintien (7) comporte un élément de fixation (74) destiné à être relié à l'élément d'absorption d'énergie (61) afin de former une liaison à verrouillage positif efficace dans la direction longitudinale, l'élément de fixation (74) étant prévu à l'intérieur du logement de maintien.

2. Colonne de direction selon la revendication 1, **caractérisée par le fait que** l'élément de retenue (7) et le tube de boîtier (2) ont des éléments de connexion correspondants (75, 23).

3. Colonne de direction selon l'une des revendications précédentes, **caractérisée par le fait que** l'élément de retenue (7) est relié au tube du boîtier (2) par un élément de rupture prédéterminé (73).

4. Colonne de direction selon l'une des revendications précédentes, **caractérisée par le fait que** la bande de flexion (61) est entourée par l'élément de retenue (7) sur au moins trois côtés.

5. Colonne de direction selon l'une des revendications précédentes, **caractérisée en ce que** l'élément de maintien (7) comporte un dispositif de guidage (72, 73) pour limiter l'espace de mouvement de l'élément d'absorption d'énergie (61).

6. Colonne de direction selon l'une des revendications précédentes, **caractérisée par le fait que** l'élément de retenue (7) comporte au moins un moyen de liaison (75, 77) pour une liaison amovible avec le tube du boîtier (2).

7. Colonne de direction selon l'une des revendications précédentes, **caractérisée par le fait que** l'élément de montage (7) et/ou le tube de boîtier (2) comporte un élément de fixation (64) pour la connexion à l'élément d'absorption d'énergie (61).

8. Colonne de direction selon l'une des revendications précédentes, **caractérisée par le fait que** l'élément d'absorption d'énergie comporte au moins une bande de flexion (61).

9. Colonne de direction selon l'une des revendications précédentes, **caractérisée par le fait que** l'élément de retenue (7) est formé d'une seule pièce.

10. Colonne de direction selon l'une des revendications précédentes, **caractérisée par le fait que** l'élément de retenue (7) est constitué d'un matériau métallique et/ou plastique.

11. Colonne de direction selon l'une des revendications précédentes, **caractérisée en ce qu'**un dispositif de serrage (5) coopère avec l'élément de retenue (7), qui peut être amené dans une position de fixation, dans laquelle il fixe le tube de carter (2) par rapport à l'unité de carter (3), et dans une position de libération, dans laquelle il libère un ajustement du tube de carter (2) par rapport à l'unité de carter (3) au moins dans la direction longitudinale, dans laquelle il libère un ajustement du tube d'enveloppe (2) par rapport à l'unité d'enveloppe (3) au moins dans la direction longitudinale, dans laquelle, dans la position de fixation, le dispositif de serrage (5) fixe l'élément de maintien (7) par rapport à l'unité d'enveloppe (3) et, dans la position de libération, libère un mouvement de l'élément de maintien (7) par rapport à l'unité d'enveloppe (3).

12. Colonne de direction selon la revendication 11, **caractérisée par le fait que** le dispositif de serrage (5) comporte un élément de verrouillage (55) et que l'élément de retenue (7) comporte un élément d'engagement correspondant (76) qui peut être mis en prise avec l'élément de verrouillage (55) dans la position de fixation afin de produire une liaison qui est efficace dans la direction longitudinale et qui peut être libérée dans la position de relâchement.
